# DEMANDE DE BREVET EUROPEEN

(11) **EP 4 520 170 A2**
(43) Date de publication de la demande: **12.03.2025**
(21) Numéro de dépôt: 24215258.5
(22) Date de dépôt: 27.10.2021
(51) Int. Cl.: A01M 7/00

(54) **SYSTÈME AGRICOLE DE PULVÉRISATION LOCALISÉE AVEC SOURCE D'ÉCLAIRAGE INTÉGRÉE**

(30) Priorité: 16.09.2021 FR 2109744
(62) Demande divisionnaire de: 21819540.2
(71) Demandeur: Exel Industries, 51200 Epernay (FR)
(72) Inventeur: HEMMERLE, Matthieu, 51200 EPERNAY (FR); CHABALLIER, Colin, 51000 Châlons en Champagne (FR)
(74) Mandataire: Argyma

(57) **Abrégé**

L'invention se situe dans le domaine de la pulvérisation agricole localisée à l'aide d'un engin agricole. Elle concerne une tête optique pour un système de pulvérisation localisée.

Selon l'invention, la tête optique comprend :
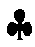 un objectif (120) agencé pour capter un flux lumineux d'une scène selon un axe optique (X),
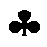 un premier capteur optique agencé pour recevoir le flux lumineux capté par l'objectif et générer des images de la scène dans au moins une première bande spectrale d'acquisition, et
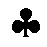 un premier ensemble (160) de M sources lumineuses (161), avec M supérieur ou égal à 3, chaque source lumineuse étant agencée pour émettre en direction de la scène un faisceau de lumière dans une première bande spectrale d'éclairage, la première bande spectrale d'éclairage couvrant au moins en partie la première bande spectrale d'acquisition, les sources lumineuses (161) étant montées autour de l'axe optique (X) de l'objectif.

## Description

### Domaine technique

L'invention se situe dans le domaine de la pulvérisation agricole et, plus précisément, de la pulvérisation localisée à l'aide d'un engin agricole en fonction de données captées en temps réel par une ou plusieurs caméras embarquées. Elle concerne une tête optique, notamment pour un système de pulvérisation localisée.

### État de la technique antérieure

La pulvérisation agricole a pour objectif d'appliquer sur des cultures différents produits de traitement visant de manière générale à optimiser leur croissance, leur rendement et/ou leur qualité. Les produits de traitement peuvent notamment être utilisés pour désherber, lutter contre les maladies, l'invasion d'insectes ou de parasites, et apporter les éléments nutritifs nécessaires au bon développement des cultures.

Un système de pulvérisation comprend, de manière classique, une cuve agencée pour contenir un produit de traitement, éventuellement dilué, une rampe de pulvérisation comportant une pluralité de buses de pulvérisation, et un circuit hydraulique reliant la cuve aux différents tronçons de pulvérisation. La rampe de pulvérisation s'étend généralement selon un axe transversal par rapport à une direction longitudinale selon laquelle l'engin agricole évolue sur la parcelle. Le circuit hydraulique peut notamment comporter une pompe agencée pour aspirer du produit de traitement dans la cuve et le conduire vers la rampe de pulvérisation, et un régulateur de pression agencé pour maintenir la pression dans le circuit hydraulique à une pression seuil prédéterminée. Chaque buse de pulvérisation est agencée pour pulvériser du produit de traitement sur une largeur prédéterminée de la parcelle définie selon l'axe transversal.

Dans un objectif de réduire l'utilisation des produits de traitement, les systèmes de pulvérisation ont été adaptés afin de permettre un traitement localisé des parcelles. Par traitement localisé, on entend une pulvérisation du produit uniquement sur les zones de la parcelle nécessitant effectivement un traitement. À cet effet, la rampe de pulvérisation est découpée en plusieurs tronçons et chaque tronçon de pulvérisation est équipé d'une ou plusieurs buses de pulvérisation et d'un distributeur agencé pour prendre une position d'ouverture, dans laquelle une circulation du produit est possible depuis la cuve jusqu'à chacune des buses de pulvérisation correspondante, et une position de fermeture, dans laquelle ladite circulation est bloquée. Les distributeurs des différents tronçons peuvent être commandés individuellement. Le système de pulvérisation comporte en outre un système d'acquisition d'images et une unité de commande. Le système d'acquisition d'images est monté sur l'engin agricole et comporte au moins une caméra agencée pour acquérir des images de la parcelle quelques dizaines ou centaines de millisecondes avant le passage du système de pulvérisation. Généralement, il comporte une pluralité de caméras réparties le long d'un deuxième axe transversal par rapport à la direction longitudinale, de sorte à couvrir toute la largeur susceptible d'être traitée par le système de pulvérisation. L'unité de commande est configurée pour déterminer des zones effectives à traiter à l'aide d'un traitement d'images effectué en temps réel sur les images acquises par le système d'acquisition d'images, et pour commander individuellement chacun des distributeurs selon les zones effectives à traiter.

Pour un traitement efficace des images acquises par les caméras, et donc une pulvérisation adéquate de la parcelle, les images doivent être de bonne qualité. En particulier, elles doivent présenter un faible niveau de bruit et une exposition correcte. En pratique, cela implique généralement d'éclairer la scène à imager. Un apport de lumière est évidemment indispensable lorsque la pulvérisation est effectuée de nuit. Il peut également être souhaitable en cas de faible luminosité, ou en présence de zones d'ombre, notamment au lever et au coucher du soleil, et sous les nuages. Une solution pour éclairer l'ensemble de la scène imagée par les différentes caméras consiste à installer des projecteurs sur la rampe de pulvérisation.

Afin d'éviter la formation d'ombres selon des axes distincts de l'axe de prise de vue de chaque caméra, un projecteur peut être associé à chaque caméra et agencé de manière à former un faisceau lumineux dont l'axe principal de propagation est aussi proche que possible de l'axe de prise de vue de la caméra. Toutefois, par construction, l'axe du faisceau lumineux et l'axe de prise de vue de la caméra ne peuvent être exactement confondus. Dans la mesure où les projecteurs sont relativement proches de la scène éclairée, ce décalage axial engendre l'apparition de zones d'ombre dans les images. Il s'ensuit des difficultés pour le traitement des images.

Par ailleurs, les conditions d'éclairage de la parcelle sont susceptibles d'évoluer dans l'espace et dans le temps. Différentes zones d'une parcelle donnée peuvent en effet être éclairées différemment selon la présence d'arbres, de bâtiments ou de nuages entre le soleil et les zones considérées de la parcelle. Les conditions d'éclairage peuvent aussi varier rapidement avec le déplacement des nuages.

Un but de l'invention est donc de proposer une solution pour acquérir des images de la parcelle avec un éclairage homogène et constant, de manière à permettre un traitement robuste de ces images pour la détermination des zones à traiter de la parcelle. Cette solution doit présenter des coûts de conception, de fabrication et de maintenance compatibles avec une utilisation à échelle industrielle.

### Exposé de l'invention

À cet effet, l'invention repose sur l'utilisation d'une source lumineuse à intensité variable pour chaque caméra. L'intensité du faisceau de lumière émis par la source lumineuse est adaptée en temps réel aux conditions d'éclairage de la zone de la parcelle imagée par la caméra associée à cette source lumineuse.

Plus précisément, l'invention a pour objet une tête optique pour un système de pulvérisation localisée porté par un engin agricole, le système de pulvérisation comprenant :
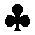 une cuve agencée pour contenir un produit de traitement,
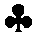 un circuit hydraulique,
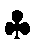 une rampe de pulvérisation comportant une pluralité de tronçons de pulvérisation reliés chacun à la cuve par le circuit hydraulique, chaque tronçon de pulvérisation étant équipé d'un distributeur et d'une ou plusieurs buses de pulvérisation, chaque distributeur étant agencé pour prendre une position d'ouverture, dans laquelle une circulation du produit est possible depuis la cuve jusqu'à chacune des buses de pulvérisation correspondantes, et une position de fermeture, dans laquelle ladite circulation est bloquée, chaque buse de pulvérisation étant agencée pour pulvériser du produit de traitement sur une zone de la parcelle,
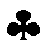 la tête optique comportant une caméra et une source d'éclairage, la caméra étant agencée pour générer une séquence d'images de la parcelle à des instants d'acquisition séparés deux à deux d'une période d'acquisition prédéterminée, la source d'éclairage étant agencée pour émettre un faisceau de lumière en direction de la parcelle avec une intensité lumineuse variable,
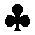 une unité de commande de pulvérisation configurée pour traiter un sous-ensemble de la séquence d'images et commander individuellement les tronçons de pulvérisation en fonction du traitement du sous-ensemble d'images, les images du sous-ensemble étant considérées à des instants de traitement séparés deux à deux d'une période de traitement prédéterminée, la période de traitement étant égale à P fois la période d'acquisition, avec P un entier supérieur ou égal à deux, et
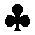 une unité de commande d'éclairage agencée pour déterminer l'intensité lumineuse du faisceau de lumière à émettre par la source d'éclairage à chaque instant de traitement, ladite intensité lumineuse pour un instant de traitement donné étant déterminée en fonction d'au moins une image de la séquence d'images prise à un instant d'acquisition compris entre l'instant de traitement considéré et l'instant de traitement précédent.

L'unité de commande de pulvérisation est configurée pour commander individuellement chaque tronçon de pulvérisation en fonction des images reçues associées à ce tronçon de pulvérisation. Elle peut notamment mettre en oeuvre un algorithme de traitement d'image permettant de déterminer si la zone d'une parcelle couverte par un tronçon de pulvérisation nécessite l'application du produit de traitement.

L'unité de commande d'éclairage permet, aux instants d'acquisition des images utilisées pour commander les tronçons de pulvérisation, d'éclairer la zone imagée de la parcelle avec un flux lumineux adapté aux conditions ambiantes d'éclairage.

Selon une forme particulière de réalisation, le système de pulvérisation comprend une pluralité de têtes optiques. Chaque tête optique comporte une caméra et une source d'éclairage. Chaque caméra est agencée pour générer une séquence d'images de la parcelle à des instants d'acquisition séparés deux à deux d'une période d'acquisition prédéterminée, et chaque source d'éclairage est agencée pour émettre un faisceau de lumière en direction de la parcelle avec une intensité lumineuse variable. L'unité de commande de pulvérisation est configurée pour traiter, pour chaque tête optique, un sous-ensemble de la séquence d'images générée par sa caméra et commander individuellement les tronçons de pulvérisation en fonction du traitement du sous-ensemble d'images, les images du sous-ensemble étant considérées à des instants de traitement séparés deux à deux d'une période de traitement prédéterminée, la période de traitement étant égale à P fois la période d'acquisition, avec P un entier supérieur ou égal à deux. L'unité de commande d'éclairage est agencée pour déterminer, pour chaque tête optique, l'intensité lumineuse du faisceau de lumière à émettre par la source d'éclairage à chaque instant de traitement, ladite intensité lumineuse pour un instant de traitement donné étant déterminée en fonction d'au moins une image de la séquence d'images prise par la caméra de la tête optique considérée à un instant d'acquisition compris entre l'instant de traitement considéré et l'instant de traitement précédent.

Les têtes optiques peuvent être montées sur la rampe de pulvérisation ou sur une autre rampe s'étendant transversalement par rapport à l'axe de déplacement de l'engin agricole. De préférence, elles sont réparties de manière à couvrir transversalement l'ensemble de la zone couverte par les buses de pulvérisation.

Il est à noter que le nombre de têtes optiques ne correspond pas nécessairement au nombre de tronçons de pulvérisation de la rampe de pulvérisation. Le système de pulvérisation peut comporter un nombre de têtes optiques inférieur au nombre de tronçons de pulvérisation lorsque l'étendue transversale de chaque zone couverte par une caméra est supérieure à l'étendue transversale de la zone couverte par un tronçon de pulvérisation. À l'inverse, le système de pulvérisation peut comporter un nombre de têtes optiques supérieur au nombre de tronçons de pulvérisation lorsque l'étendue transversale de chaque zone couverte par une caméra est inférieure à l'étendue transversale de la zone couverte par un tronçon de pulvérisation.

L'intensité lumineuse à émettre par la source d'éclairage de chaque tête optique est par exemple déterminée, pour un instant de traitement donné, en fonction de l'image de la séquence générée à l'instant d'acquisition précédant immédiatement cet instant de traitement donné. Dans un autre exemple de réalisation, l'intensité lumineuse est déterminée en fonction de plusieurs images générées entre l'instant de traitement donné et l'instant de traitement précédent. En particulier, il est possible de prendre en compte plusieurs images, avec une pondération plus importante pour les images plus récentes que pour les images plus anciennes.

De préférence, les instants d'acquisition sont identiques pour toutes les caméras des différentes têtes optiques. Ainsi, malgré le déplacement continu de l'engin agricole au cours de l'acquisition des images, il est possible de reconstituer facilement une séquence d'images continues sur toute l'étendue transversale de la rampe de pulvérisation. L'unité de traitement peut alors être agencée pour traiter globalement chaque image considérée à un instant de traitement.

Dans un autre mode de réalisation, l'unité de traitement est agencée pour traiter en parallèle les images générées par les caméras des différentes têtes optiques.

De préférence, la caméra et la source lumineuse de chaque tête optique sont regroupées dans un même boîtier. Les conditions d'illumination peuvent alors être adaptées localement pour chaque caméra.

Selon une forme particulière de réalisation, l'unité de commande d'éclairage est agencée pour déterminer, pour chaque tête optique, l'intensité lumineuse du faisceau de lumière à émettre par sa source d'éclairage à chaque instant d'acquisition, ladite intensité lumineuse pour un instant d'acquisition donné étant déterminée en fonction d'au moins une image de la séquence d'images prise à un instant d'acquisition antérieur par la caméra de la tête optique considérée. Autrement dit, l'intensité lumineuse n'est plus ajustée uniquement aux instants de traitement auxquels sont générées les images utilisées pour la commande des tronçons de pulvérisation, mais à tous les instants d'acquisition. Cette forme de réalisation présente l'avantage de faire converger plus rapidement l'intensité lumineuse émise par chaque source d'éclairage vers l'intensité lumineuse souhaitée. L'intensité lumineuse pour un instant d'acquisition donné est de préférence déterminée en fonction de l'image de la séquence prise à l'instant d'acquisition précédent.

Toujours selon une forme particulière de réalisation, compatible avec la précédente, l'unité de commande d'éclairage est composée d'une pluralité de sous-unités de commande d'éclairage. Chaque sous-unité de commande d'éclairage est intégrée dans une tête optique et est agencée pour déterminer l'intensité lumineuse du faisceau de lumière à émettre par la source d'éclairage de la tête optique respective en fonction d'au moins une image générée par la caméra de la tête optique respective. L'intensité lumineuse peut être déterminée pour chaque instant de traitement ou pour chaque instant d'acquisition, comme indiqué précédemment.

L'unité de commande d'éclairage peut notamment être agencée pour déterminer, pour chaque tête optique, l'intensité lumineuse du faisceau de lumière à émettre par sa source d'éclairage, en fonction d'un histogramme des niveaux d'intensité lumineuse des pixels de l'image ou des images considérées. Par histogramme des niveaux d'intensité lumineuse d'une image, on entend une fonction discrète qui associe à chaque valeur d'intensité lumineuse le nombre de pixels prenant cette valeur. En particulier, l'intensité lumineuse du faisceau de lumière à émettre peut être augmentée lorsque l'histogramme révèle une sous-exposition, et diminuée lorsque l'histogramme révèle une surexposition.

Selon une forme particulière de réalisation, dans chaque tête optique, la caméra comprend un objectif agencé pour capter un flux lumineux provenant de la parcelle selon un axe optique et un premier capteur optique agencé pour recevoir le flux lumineux et générer une première séquence d'images de la parcelle, et la source d'éclairage comprend un premier ensemble de M sources lumineuses, avec M un entier supérieur ou égal à deux, les sources lumineuses étant réparties autour de l'axe optique de l'objectif.

Dans chaque tête optique, le premier capteur optique peut notamment être agencé pour générer la première séquence d'images de la parcelle dans une ou plusieurs premières bandes spectrales d'acquisition, et le premier ensemble de M sources lumineuses peut alors être agencé pour émettre un premier faisceau de lumière dans une ou plusieurs premières bandes spectrales d'éclairage, lesdites une ou plusieurs premières bandes spectrales d'éclairage couvrant les une ou plusieurs premières bandes spectrales d'acquisition.

La ou les premières bandes spectrales d'acquisition peuvent couvrir au moins en partie le spectre visible, c'est-à-dire la bande de longueurs d'onde comprise entre 380 nm et 750 nm. À titre d'exemple, le premier capteur optique est un capteur RVB, c'est-à-dire qu'il comporte une matrice sensible formée de pixels comprenant chacun au moins un sous-pixel sensible aux longueurs d'onde dans le rouge, au moins un sous-pixel sensible aux longueurs d'onde dans le vert, et au moins un sous-pixel sensible aux longueurs d'onde dans le bleu. La ou les premières bandes spectrales d'éclairage couvrent la ou les premières bandes spectrales d'acquisition, de manière à assurer un éclairage efficient pour le premier capteur optique.

Selon une forme particulière de réalisation, dans chaque tête optique, la caméra comprend en outre un deuxième capteur optique agencé pour recevoir le flux lumineux capté par l'objectif et générer une deuxième séquence d'images de la parcelle dans une ou plusieurs deuxièmes bandes spectrales d'acquisition, et la source d'éclairage comprend un deuxième ensemble de N sources lumineuses, avec N un entier supérieur ou égal à deux. Le deuxième ensemble de N sources lumineuses est agencé pour émettre un deuxième faisceau de lumière dans une ou plusieurs deuxièmes bandes spectrales d'éclairage, lesdites une ou plusieurs deuxièmes bandes spectrales d'éclairage couvrant les une ou plusieurs deuxièmes bandes spectrales d'acquisition. Les sources lumineuses du deuxième ensemble sont réparties autour de l'axe optique de l'objectif.

Le deuxième capteur optique peut être un capteur infrarouge. En particulier, la ou les deuxièmes bandes spectrales d'acquisition peuvent couvrir au moins en partie le spectre proche infrarouge, c'est-à-dire la bande de longueurs d'onde comprise entre 750 nm et 900 nm.

Chaque tête optique peut comprendre un filtre dichroïque agencé pour réfléchir le flux lumineux dans la ou les premières bandes spectrales d'acquisition et transmettre ledit flux lumineux dans la ou les deuxièmes bandes spectrales d'acquisition. Les capteurs optiques de chaque tête optique peuvent ainsi recevoir un flux lumineux selon un même axe de prise de vue, en l'occurrence l'axe optique de l'objectif. Le traitement des images en est facilité.

Le nombre M de sources lumineuses du premier ensemble est par exemple égal à 3, 6, 10, 12, 24 ou 48. De même, le nombre N de sources lumineuses du deuxième ensemble est par exemple égal à 3, 6, 10, 12, 24 ou 48.

Avantageusement, dans chaque tête optique, les sources lumineuses du premier ensemble sont agencées pour former un éclairage uniforme de la zone de la parcelle imagée par la caméra. Toujours avantageusement, les sources lumineuses du deuxième ensemble sont agencées pour former un éclairage uniforme de la zone de la parcelle imagée par la caméra. Par éclairage uniforme, on entend un éclairage tel que chaque point de la zone imagée reçoive une même quantité de lumière.

Selon un premier mode de réalisation, dans chaque tête optique, les sources lumineuses du premier ensemble sont réparties angulairement de façon uniforme autour de l'axe optique de l'objectif. Autrement dit, deux sources lumineuses adjacentes du premier ensemble sont espacées d'un angle de 360/M degrés autour de l'axe optique de l'objectif. De même, les sources lumineuses du deuxième ensemble peuvent être réparties angulairement de façon uniforme autour de l'axe optique de l'objectif. Autrement dit, deux sources lumineuses adjacentes du deuxième ensemble sont espacées d'un angle de 360/N degrés autour de l'axe optique de l'objectif.

Selon un deuxième mode de réalisation, les sources lumineuses du premier ensemble sont réparties angulairement autour de l'axe optique de l'objectif de façon à former un éclairage uniforme de la zone de la parcelle imagée par la caméra. De même, les sources lumineuses du deuxième ensemble peuvent être réparties angulairement autour de l'axe optique de l'objectif de façon à former un éclairage uniforme de la zone de la parcelle imagée par la caméra. En particulier, il est à noter que, lorsque la tête optique est inclinée vers le sol, plus une source lumineuse est disposée sur le haut de la tête optique et plus elle illumine une surface importante. Pour compenser cet effet, les sources lumineuses d'un ensemble peuvent être réparties avec un écart angulaire augmentant depuis la source lumineuse la plus haute vers la source lumineuse la plus basse.

Dans chaque tête optique, les sources lumineuses de chaque ensemble peuvent être disposées en anneau autour de l'axe optique de l'objectif. Dans chaque anneau, les sources lumineuses peuvent être disposées à une même distance de l'axe optique de l'objectif ou être disposées dans une plage de distances prédéterminée. De préférence, chaque anneau est centré sur l'axe optique. Lorsque les sources lumineuses d'un ensemble sont réparties angulairement de façon uniforme, le barycentre des sources lumineuses de l'ensemble considéré est situé sur l'axe optique de l'objectif. À titre d'exemple, les sources lumineuses du premier ensemble forment un premier anneau et les sources lumineuses du deuxième ensemble forment un deuxième anneau, l'objectif et les deux anneaux étant concentriques.

Selon une forme particulière de réalisation, dans chaque tête optique, les sources lumineuses du premier ensemble sont agencées pour que chaque point de la zone imagée reçoive de la lumière d'au moins deux sources lumineuses du premier ensemble. De même, les sources lumineuses du deuxième ensemble peuvent être agencées pour que chaque point de la zone imagée reçoive de la lumière d'au moins deux sources lumineuses du deuxième ensemble.

Toujours selon une forme particulière de réalisation, dans chaque tête optique, chaque source de lumière du premier ensemble est agencée pour qu'un axe principal de son faisceau de lumière soit parallèle à l'axe optique de l'objectif. De même, chaque source lumineuse du deuxième ensemble peut être agencée pour qu'un axe principal de son faisceau de lumière soit parallèle à l'axe optique de l'objectif.

L'invention a pour objet une tête optique pour un système de pulvérisation localisée porté par un engin agricole. La tête optique comprend une caméra et une source d'éclairage, la caméra étant agencée pour générer une séquence d'images de la parcelle, et la source d'éclairage étant agencée pour émettre un faisceau de lumière en direction de la parcelle avec une intensité lumineuse variable.

La caméra et la source d'éclairage sont de préférence intégrées dans un même boîtier.

Selon une forme particulière de réalisation, la caméra de la tête optique comprend un objectif agencé pour capter un flux lumineux provenant de la parcelle selon un axe optique et un premier capteur optique agencé pour recevoir le flux lumineux et générer une première séquence d'images de la parcelle. La source d'éclairage peut comprendre un premier ensemble de M sources lumineuses, avec M un entier supérieur ou égal à deux, les sources lumineuses étant réparties autour de l'axe optique de l'objectif.

Le premier capteur optique peut notamment être agencé pour générer la première séquence d'images de la parcelle dans une ou plusieurs premières bandes spectrales d'acquisition, et le premier ensemble de M sources lumineuse peut alors être agencé pour émettre un premier faisceau de lumière dans une ou plusieurs premières bandes spectrales d'éclairage, lesdites une ou plusieurs premières bandes spectrales d'éclairage couvrant les une ou plusieurs premières bandes spectrales d'acquisition.

Toujours selon une forme particulière de réalisation, la caméra de la tête optique comprend en outre un deuxième capteur optique agencé pour recevoir le flux lumineux capté par l'objectif et générer des images de la parcelle dans une ou plusieurs deuxièmes bandes spectrales d'acquisition, et la source d'éclairage comprend un deuxième ensemble de N sources lumineuses, avec N un entier supérieur ou égal à deux. Le deuxième ensemble de N sources lumineuses est agencé pour émettre un deuxième faisceau de lumière dans une ou plusieurs deuxièmes bandes spectrales d'éclairage, lesdites une ou plusieurs deuxièmes bandes spectrales d'éclairage couvrant les une ou plusieurs deuxièmes bandes spectrales d'acquisition. Les sources lumineuses du deuxième ensemble sont réparties autour de l'axe optique de l'objectif.

La tête optique peut également comporter une sous-unité de commande d'éclairage agencée pour déterminer l'intensité lumineuse du faisceau de lumière à émettre par sa source d'éclairage en fonction d'au moins une image générée par la caméra.

Les diverses formes de réalisation décrites ci-dessus en lien avec la ou les têtes optiques du système de pulvérisation décrit ci-dessus sont applicables à la tête optique considérée seule.

### Brève description des dessins

D'autres caractéristiques, détails et avantages de l'invention ressortiront à la lecture de la description qui va suivre, donnée uniquement à titre d'exemple et faisant référence aux dessins annexés sur lesquels :
- la figure 1 représente, dans une vue en perspective, un exemple de tête optique selon l'invention pour un système de pulvérisation localisée ;
- la figure 2 représente, de façon schématique, un agencement de certains composants de la tête optique de la figure 1 ;
- la figure 3 représente schématiquement un engin agricole équipé d'un système de pulvérisation localisée selon l'invention ;
- la figure 4 illustre, par des chronogrammes, un exemple de chronologie d'acquisition des images et de traitement de ces images pour ajuster l'intensité lumineuse de la source d'éclairage de chaque tête optique et déterminer les zones de la parcelle à traiter.

### Description détaillée

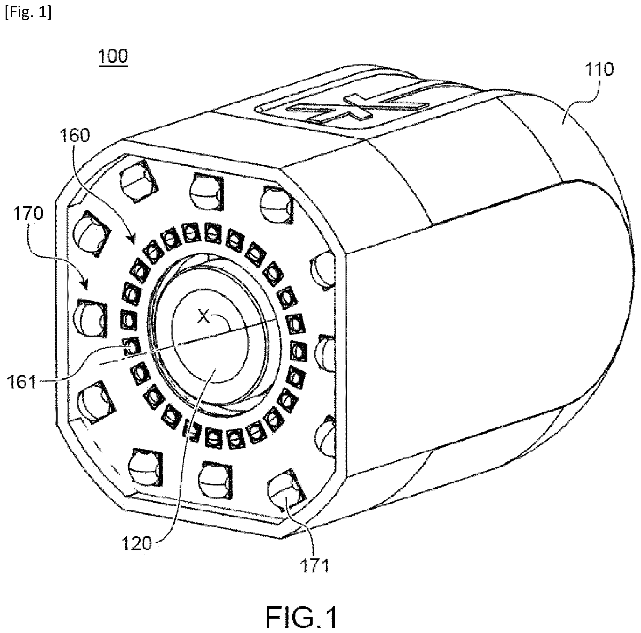

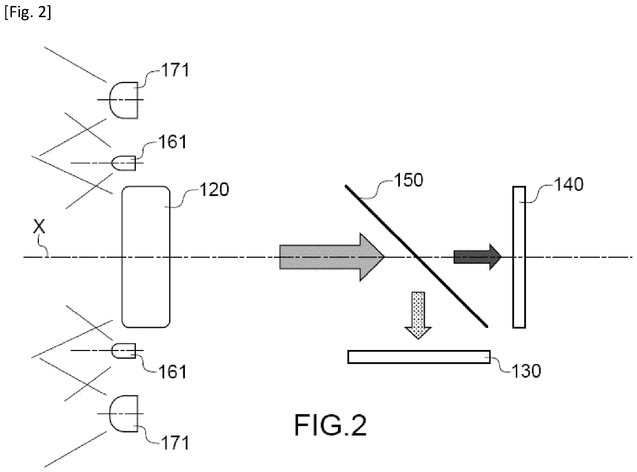

La figure 1 représente, dans une vue en perspective, un exemple de tête optique selon l'invention destinée à équiper un système de pulvérisation localisée et la figure 2 représente, de façon schématique, l'agencement de certains de ses composants. Le système de pulvérisation est porté par un engin agricole, par exemple un tracteur ou une remorque. La tête optique 100 comporte un carter 110 à l'intérieur duquel sont logés un objectif 120, un premier capteur optique 130, un deuxième capteur optique 140, un miroir dichroïque 150, un premier ensemble 160 de sources lumineuses 161, un deuxième ensemble 170 de sources lumineuses 171 et une sous-unité de commande d'éclairage 180. Les capteurs optiques 130, 140, le miroir dichroïque 150 et la sous-unité de commande d'éclairage 180 sont visibles uniquement en figure 2.

L'objectif 120 est agencé pour capter un flux lumineux d'une zone de la parcelle selon un axe optique X et le focaliser sur les capteurs optiques 130, 140. L'axe optique X définit l'axe de prise de vue pour les deux capteurs optiques 130 et 140. Typiquement, la tête optique est montée sur une rampe de pulvérisation et orientée vers le bas, c'est-à-dire sous un plan horizontal.

Le premier capteur optique 130 est agencé pour recevoir une partie du flux lumineux ayant traversé l'objectif 120 et générer une première séquence d'images dans trois premières bandes spectrales d'acquisition situées à l'intérieur du spectre visible, par exemple des bandes RVB. Le deuxième capteur optique 140 est quant à lui agencé pour recevoir une autre partie du flux lumineux ayant traversé l'objectif 120 et générer une deuxième séquence d'images dans une deuxième bande spectrale d'acquisition située à l'intérieur du spectre proche infrarouge. Les images de chaque séquence sont générées à des instants d'acquisition t_{acq} séparés deux à deux d'une période d'acquisition Δ_{acq} prédéterminée. De préférence, les instants d'acquisition sont identiques pour les deux séquences d'images. La période d'acquisition permet de définir une fréquence d'acquisition. La fréquence d'acquisition est par exemple égale à 40 Hz. Le miroir dichroïque 150 permet de séparer le flux lumineux en fonction des longueurs d'onde. En l'occurrence, le miroir dichroïque 150 réfléchit la partie du flux lumineux dont les longueurs d'onde se situent dans les premières bandes spectrales d'acquisition, et transmet la partie du flux lumineux dont les longueurs d'onde se situent dans la deuxième bande spectrale d'acquisition.

Le premier ensemble 160 comprend 24 sources lumineuses 161 réparties en anneau autour de l'objectif 120. De même, le deuxième ensemble 170 comprend 12 sources lumineuses 171 réparties en anneau autour de l'objectif 120, à une distance plus grande de l'axe optique X que les sources lumineuses 161. Sur la figure 2, seules deux sources lumineuses 161 et deux sources lumineuses 171 sont représentées. Les sources lumineuses 161 et 171 sont réparties angulairement de manière uniforme. Les sources lumineuses 161 sont agencées pour émettre chacune un faisceau de lumière selon un axe principal de propagation parallèle à l'axe optique X, de sorte à former globalement un premier faisceau de lumière. Ce premier faisceau de lumière est situé dans une première bande spectrale d'éclairage couvrant les trois premières bandes spectrales d'acquisition. Les sources lumineuses 171 sont agencées pour émettre chacune un faisceau de lumière selon un axe principal de propagation parallèle à l'axe optique X, de sorte à former un deuxième faisceau de lumière. Ce deuxième faisceau de lumière est situé dans une deuxième bande spectrale d'éclairage couvrant la deuxième bande spectrale d'acquisition. Ainsi, les sources lumineuses 161 génèrent un éclairage uniforme adapté pour le premier capteur optique 130 et les sources lumineuses 171 génèrent un éclairage uniforme adapté pour le deuxième capteur optique 140. En outre, du fait de l'agencement annulaire de chaque ensemble 160, 170, les premier et deuxième faisceaux de lumière présentent chacun un axe principal de propagation confondu avec l'axe optique X. En conséquence, les images générées par chaque capteur optique 130, 140 sont dépourvues de zones d'ombre, en particulier des ombres habituellement observées par une source lumineuse ponctuelle. Les sources lumineuses 161, 171 sont par exemples des diodes électroluminescentes. Selon l'invention, le premier ensemble 160 permet de former un premier faisceau de lumière d'intensité lumineuse variable et le deuxième ensemble 170 permet de former un deuxième faisceau de lumière d'intensité lumineuse variable.

Les intensités lumineuses des faisceaux de lumière sont modifiées par la sous-unité de commande d'éclairage 180. La sous-unité de commande d'éclairage 180 est agencée pour recevoir en temps réel la première séquence d'images générée par le premier capteur optique 130 et la deuxième séquence d'images générée par le deuxième capteur optique 140, et pour déterminer les intensités lumineuses du premier et du deuxième faisceau de lumière à émettre à chaque instant d'acquisition t_{acq}. L'intensité lumineuse du premier faisceau de lumière à émettre à chaque instant d'acquisition donné t_{acq} est par exemple déterminée en fonction de l'image de la première séquence prise à l'instant d'acquisition précédent. Plus particulièrement, cette intensité lumineuse peut être déterminée en fonction d'un histogramme des niveaux d'intensité lumineuse des pixels de l'image précédente. De même, l'intensité lumineuse du deuxième faisceau de lumière à émettre à chaque instant d'acquisition t_{acq} est par exemple déterminée en fonction de l'image de la deuxième séquence prise à l'instant d'acquisition précédent, notamment d'un histogramme des niveaux d'intensité lumineuse de ses pixels. L'intensité lumineuse à émettre par chaque ensemble 160, 170 peut être déterminée directement à l'aide de la somme des niveaux d'intensité lumineuse de l'histogramme et d'une table de correspondance. Dans un autre exemple de réalisation, l'intensité lumineuse est augmentée lorsque l'histogramme est représentatif d'une sous-exposition, et diminuée lorsque l'histogramme est représentatif d'une surexposition. Par ailleurs, comme expliqué ci-dessous, l'intensité lumineuse des premier et deuxième faisceaux n'est pas nécessairement déterminée pour chaque instant d'acquisition. Elle peut être déterminée uniquement pour les instants auxquels sont prises les images utilisées pour l'identification des zones à traiter.

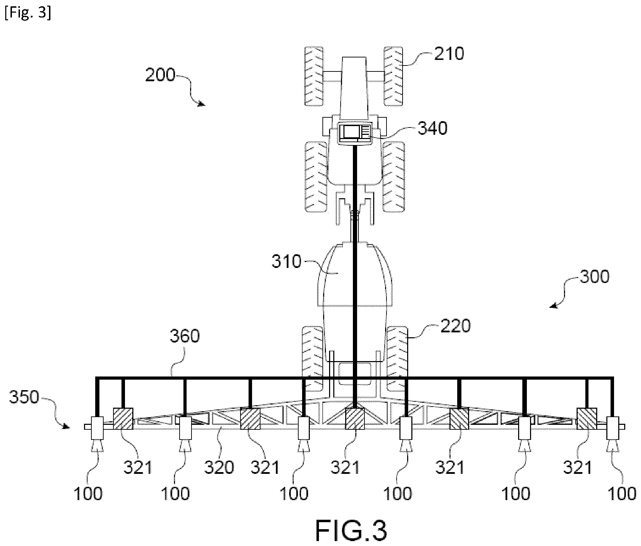

La figure 3 représente schématiquement un engin agricole équipé d'un système de pulvérisation localisée selon l'invention. L'engin agricole 200 comprend un tracteur 210 et une remorque 220. Le système de pulvérisation localisée 300 comporte une cuve 310, une rampe de pulvérisation 320, un circuit hydraulique, non représenté, une unité de commande de pulvérisation 340, un système d'acquisition d'images 350 et un réseau de communication 360. La remorque 220 porte la cuve 310, le circuit hydraulique, la rampe de pulvérisation 320 et le système d'acquisition d'images 350. Dans un autre exemple de réalisation, le tracteur 210 pourrait porter l'ensemble des éléments du système de pulvérisation 300.

La cuve 310 est agencée pour contenir un produit de traitement à pulvériser sur les zones à traiter d'une parcelle. Le produit de traitement est par exemple un produit de biostimulation, par exemple un engrais ou un produit permettant de stimuler les défenses naturelles de la plante cultivée, ou un produit de biocontrôle, par exemple un herbicide, un insecticide ou un fongicide.

La rampe de pulvérisation 320 s'étend selon un axe transversal, orthogonal à un axe d'avancement de l'engin agricole 200, et comporte une pluralité de tronçons de pulvérisation 321. Dans l'exemple de la figure 3, cinq tronçons de pulvérisation sont représentés. Néanmoins, la rampe de pulvérisation peut comprendre un nombre bien plus élevé de tronçons de pulvérisation, par exemple plusieurs dizaines. Chaque tronçon de pulvérisation 321 est relié individuellement à la cuve 310 par le circuit hydraulique et comprend un distributeur et une buse de pulvérisation. Chaque distributeur est relié à l'unité de commande de pulvérisation 340 par l'intermédiaire du réseau de communication 360 et est commandé par cette unité entre au moins une position d'ouverture, dans laquelle une circulation du produit de traitement est possible depuis la cuve 310 jusqu'à la buse de pulvérisation correspondante, et une position de fermeture, dans laquelle ladite circulation est bloquée. Chaque buse de pulvérisation est agencée pour pulvériser du produit de traitement sur une zone de la parcelle. En particulier, elle est agencée pour pulvériser du produit de traitement sur une largeur prédéterminée, définie selon l'axe transversal.

Le système d'acquisition d'images 350 comprend une pluralité de têtes optiques 100 telles que définies en référence aux figures 1 et 2. Chaque tête optique 100 est reliée à l'unité de commande de pulvérisation 340 par l'intermédiaire du réseau de communication 360, de manière à lui transférer tout ou parties des images acquises. Les têtes optiques 100 sont montées sur la rampe de pulvérisation 320 et sont agencées de manière à acquérir des images de zones contiguës de la parcelle. Les zones imagées doivent se trouver en amont des buses de pulvérisation, de manière à permettre un traitement des images par l'unité de commande de pulvérisation avant le passage des buses de pulvérisation. Il est à noter que les têtes optiques 100 pourraient être montées sur une rampe distincte de la rampe de pulvérisation 320, par exemple à l'avant du tracteur 210.

Il est à noter que, dans l'exemple de réalisation considéré ci-dessus, chaque tête optique 100 intègre une sous-unité de commande d'éclairage 180 ajustant les intensités lumineuses de ses ensembles 160, 170 de sources lumineuses. Ces ajustements sont ainsi réalisés localement dans chaque tête optique. Toutefois, les sous-unités de commande d'éclairage 180 des différentes têtes optiques peuvent être considérées collectivement comme formant une unité de commande d'éclairage. Dans un autre exemple de réalisation, les fonctions des différentes sous-unités peuvent être regroupées dans une entité matérielle unique, également appelée unité de commande d'éclairage. Par ailleurs, le système de pulvérisation localisée peut comporter une interface de commande centrale permettant de commander l'unité de commande d'éclairage dans un mode allumé, dans lequel les sources d'éclairage sont allumées et leur intensité lumineuse ajustée conformément à l'invention, et un mode éteint, dans lequel les sources d'éclairage restent éteintes.

L'unité de commande de pulvérisation 340 est agencée pour déterminer, sur la base des images acquises par les têtes optiques, si un apport de produit de traitement est nécessaire pour les zones imagées. Selon une particularité de l'invention, toutes les images acquises par le ou les capteurs optiques ne sont pas exploitées pour déterminer les zones à traiter. Les images sont par exemple exploitées à une fréquence de traitement de 10 Hz, ce qui est en général suffisant pour assurer une continuité entre les images selon l'axe d'avancement. La charge de calcul est alors allégée par rapport à une prise en compte de l'ensemble des images de la séquence, par exemple à la fréquence d'acquisition de 40 Hz. L'analyse des images peut s'appuyer sur différents algorithmes de traitement d'images. Elle peut notamment analyser la forme des plantes et leurs propriétés spectrales (réflectance de la scène). Lorsque du produit de traitement doit être appliqué localement, l'unité de commande de pulvérisation 340 commande alors le distributeur correspondant à la zone devant être traitée dans la position d'ouverture, de manière à ce que la buse de pulvérisation correspondante délivre du produit de traitement. En revanche, lorsque l'application de produit de traitement n'est pas nécessaire pour une zone couverte par une buse de pulvérisation, l'unité de commande de pulvérisation 340 commande le distributeur correspondant dans la position de fermeture.

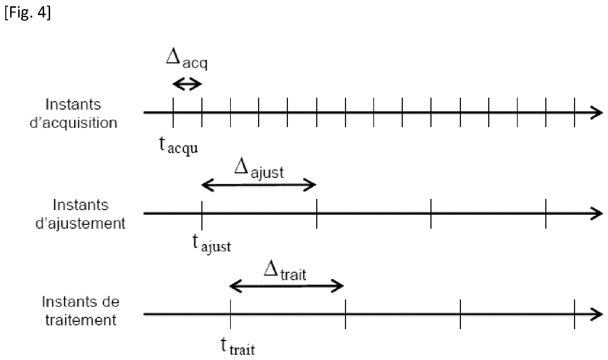

La figure 4 illustre, par des chronogrammes, un exemple de chronologie pour l'acquisition des images et leurs traitements en vue, d'une part, d'ajuster la ou les intensités lumineuses des sources d'éclairage et, d'autre part, de déterminer les zones de la parcelle à traiter. Un premier chronogramme représente les instants d'acquisition t_{acq} des images de la ou des séquences générées dans les différentes têtes optiques. Comme indiqué précédemment, ces instants d'acquisition sont de préférence synchronisés pour toutes les têtes optiques. Les instants d'acquisition successifs t_{acq} sont séparés d'une période d'acquisition Δ_{acq} égale à 25 ms pour une fréquence d'acquisition de 40 Hz. Un deuxième chronogramme représente les instants d'ajustement tₐⱼᵤₛₜ auxquels les images sont utilisées pour l'ajustement des intensités lumineuses. Ces instants d'ajustement tₐⱼᵤₛₜ sont séparés d'une période d'ajustement Δₐⱼᵤₛₜ égale à 100 ms, correspondant à quatre fois la période d'acquisition Δ_{acq}. Un troisième chronogramme représente les instants de traitement tₜᵣₐᵢₜ auxquels les images sont utilisées pour déterminer les zones de la parcelle sur lesquelles du produit doit être pulvérisé. Ces instants de traitement tₜᵣₐᵢₜ sont séparés d'une période de traitement Δₜᵣₐᵢₜ égale à 100 ms, correspondant à quatre fois la période d'acquisition Δ_{acq}. Les chronogrammes de la figure 4 illustrent le fait que, pour chaque instant de traitement donné tₜᵣₐᵢₜ, correspondant à un instant d'acquisition t_{acq}, la ou les intensités lumineuses à émettre par les sources d'éclairage sont déterminées à partir des images acquises à l'instant tₐⱼᵤₛₜ correspondant à l'instant d'acquisition précédent. Ainsi, dans cet exemple de réalisation, les intensités lumineuses sont déterminées avec la même fréquence que la fréquence de traitement. Toutefois, dans un autre exemple de réalisation, non représenté, les intensités lumineuses des sources d'éclairage peuvent être déterminées à la fréquence d'acquisition des images. En conséquence, à chaque acquisition d'une image dans une tête optique, l'intensité lumineuse de sa source d'éclairage est ajustée sur la base de l'image acquise à l'instant d'acquisition précédent.

De manière générale, l'intensité lumineuse d'une source d'éclairage peut être ajustée par l'intensité d'illumination de chaque source lumineuse, le rapport cyclique entre la durée d'illumination et la somme des durées d'illumination et de non-illumination, et/ou le ratio du nombre de sources lumineuses allumées sur le nombre total de sources lumineuses.

## Revendications

1. Tête optique pour un système de pulvérisation localisée porté par un engin agricole, la tête optique (100) comprenant :
* un objectif (120) agencé pour capter un flux lumineux d'une scène selon un axe optique (X),
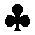 un premier capteur optique (130) agencé pour recevoir le flux lumineux capté par l'objectif et générer des images de la scène dans au moins une première bande spectrale d'acquisition,
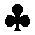 un premier ensemble (160) de M sources lumineuses (161), avec M supérieur ou égal à 3, chaque source lumineuse étant agencée pour émettre en direction de la scène un faisceau de lumière dans une première bande spectrale d'éclairage, la première bande spectrale d'éclairage couvrant au moins en partie la première bande spectrale d'acquisition, les sources lumineuses (161) étant montées autour de l'axe optique (X) de l'objectif,
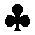 un deuxième capteur optique (140) agencé pour recevoir le flux lumineux capté par l'objectif et générer des images de la scène dans au moins une deuxième bande spectrale d'acquisition, la deuxième bande spectrale d'acquisition étant distincte de la première bande spectrale d'acquisition, et
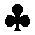 un deuxième ensemble (170) de N sources lumineuses (171), avec N supérieur ou égal à 3, chaque source lumineuse étant agencée pour émettre en direction de la scène un faisceau de lumière dans une deuxième bande spectrale d'éclairage, la deuxième bande spectrale d'éclairage couvrant au moins en partie la deuxième bande spectrale d'acquisition et étant distincte de la première bande spectrale d'éclairage, les sources lumineuses (171) du deuxième ensemble étant montées autour de l'axe optique (X) de l'objectif.

2. Tête optique selon la revendication 1, dans laquelle la première bande spectrale d'acquisition et/ou la première bande spectrale d'éclairage couvrent au moins en partie le spectre visible.

3. Tête optique selon la revendication 1 ou 2, dans laquelle la deuxième bande spectrale d'acquisition et/ou la deuxième bande spectrale d'éclairage couvrent au moins en partie le spectre infrarouge.

4. Tête optique selon l'une des revendications précédentes, dans laquelle les sources lumineuses (161) du premier ensemble (160) sont agencées pour former un éclairage uniforme, et/ou dans laquelle les sources lumineuses (171) du deuxième ensemble (170) sont agencées pour former un éclairage uniforme.

5. Tête optique selon l'une des revendications précédentes, dans laquelle les sources lumineuses (161) du premier ensemble (160) sont réparties angulairement de façon uniforme autour de l'axe optique (X) de l'objectif, et/ou dans laquelle les sources lumineuses (171) du deuxième ensemble (170) sont réparties angulairement de façon uniforme autour de l'axe optique (X) de l'objectif.

6. Tête optique selon l'une des revendications précédentes, dans laquelle les sources lumineuses (161) du premier ensemble (160) sont agencées pour que chaque point de la scène reçoive de la lumière d'au moins deux sources lumineuses du premier ensemble, et/ou dans laquelle les sources lumineuses (171) du deuxième ensemble (170) sont agencées pour que chaque point de la scène reçoive de la lumière d'au moins deux sources lumineuses du deuxième ensemble.

7. Tête optique selon l'une des revendications précédentes, dans laquelle chaque source lumineuse (161) du premier ensemble (160) est agencée pour qu'un axe principal de son faisceau de lumière soit parallèle à l'axe optique (X) de l'objectif, et/ou dans laquelle chaque source lumineuse (171) du deuxième ensemble (170) est agencée pour qu'un axe principal de son faisceau de lumière soit parallèle à l'axe optique (X) de l'objectif.

8. Tête optique selon l'une des revendications précédentes comprenant, en outre, une unité de commande d'acquisition d'image (340) agencée pour commander au moins un paramètre de prise de vue du premier capteur optique (130) pour la génération d'une image par ledit premier capteur optique et/ou au moins un paramètre d'illumination des sources lumineuses (161) du premier ensemble (160) pour la génération d'une image par le premier capteur optique, en fonction d'un histogramme des niveaux de gris d'au moins une image précédemment générée par ledit premier capteur optique.

9. Tête optique selon l'une des revendications précédentes, comprenant, en outre, une unité de commande d'acquisition d'image (340) agencée pour commander au moins un paramètre de prise de vue du deuxième capteur optique (140) pour la génération d'une image par ledit deuxième capteur optique et/ou au moins un paramètre d'illumination des sources lumineuses (171) du deuxième ensemble (170) pour la génération d'une image par le deuxième capteur optique, en fonction d'un histogramme des niveaux de gris d'au moins une image précédemment générée par ledit deuxième capteur optique.

10. Système de pulvérisation localisée porté par un engin agricole, comprenant :
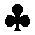 une cuve (310) agencée pour contenir un produit de traitement,
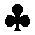 un circuit hydraulique,
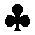 une rampe de pulvérisation (320) comportant une pluralité de tronçons de pulvérisation (321) reliés chacun à la cuve par le circuit hydraulique, chaque tronçon de pulvérisation étant équipé d'un distributeur et d'une buse de pulvérisation, chaque distributeur étant agencé pour prendre une position d'ouverture, dans laquelle une circulation du produit est possible depuis la cuve jusqu'à la buse de pulvérisation correspondante, et une position de fermeture, dans laquelle ladite circulation est bloquée, chaque buse de pulvérisation étant agencée pour pulvériser du produit de traitement sur une zone de la parcelle,
* un système d'acquisition d'images (350) comportant une pluralité de têtes optiques (100) selon l'une des revendications précédentes, les têtes optiques étant montées sur la rampe de pulvérisation (320), et
une unité de commande de pulvérisation (340) configurée pour recevoir des images des têtes optiques et commander les tronçons de pulvérisation (321) en fonction des images reçues.
